# EUROPÄISCHE PATENTSCHRIFT

(11) **EP 1 076 780 B1**
(45) Veröffentlichungstag und Bekanntmachung des Hinweises auf die Patenterteilung: **18.12.2002**
(21) Anmeldenummer: 99920840.8
(22) Anmeldetag: 03.05.1999
(51) Int. Cl.: F16F 7/12

(54) **TRAGSTRUKTUR MIT EINEM DEFORMATIONSELEMENT MIT VERKÜRZTER RESTBLOCKLÄNGE**
SUPPORT STRUCTURE COMPRISING A DEFORMATION ELEMENT WITH REDUCED RESIDUAL BLOCK LENGTH
STRUCTURE PORTEUSE PRESENTANT UN ELEMENT DE DEFORMATION AVEC UNE LONGUEUR A BLOC RESIDUELLE REDUITE

(30) Priorität: 07.05.1998 DE 19820449
(43) Veröffentlichungstag der Anmeldung: 21.02.2001
(73) Patentinhaber: Emitec Gesellschaft für Emissionstechnologie mbH, 53797 Lohmar (DE)
(72) Erfinder: BRÜCK, Rolf, D-51429 Bergisch Gladbach (DE); KRUSE, Carsten, D-53797 Lohmar (DE); STRIGL, Raimund, D-85084 Reichertshofen (DE)
(74) Vertreter: Kahlhöfer, Hermann, Dipl.-Phys.
(86) Internationale Anmeldenummer: EP9902998
(87) Internationale Veröffentlichungsnummer: WO99057455

(56) Entgegenhaltungen:
- DE-A- 3 822 322
- DE-A- 4 425 830
- US-A- 3 466 733
- US-A- 3 905 454
- US-A- 4 336 868

## Beschreibung

Die Erfindung betrifft eine Tragstruktur mit einem Deformationselement, insbesondere für ein Kraftfahrzeug, zur Absorption von Bewegungsenergie bei einem Aufprall gemäß Oberbegriff von Anspruch 1.

Deformationselemente zur Absorption von Bewegungsenergie werden in unterschiedlichen Bereichen der Technik eingesetzt. Ein besonderes Anwendungsgebiet für derartige Elemente sind Kraftfahrzeuge, deren technische und Sicherheits-Standards es erfordern, daß im Fall von geringen Stößen die Stoßenergie durch entsprechende Elemente im wesentlichen elastisch und im Fall von stärkeren Stößen beispielsweise bei Unfällen, die Bewegungsenergie durch Deformationselemente aufgenommen und in Verformung derselben umgesetzt wird. So sind beispielsweise Deformationselemente bekannt, welche für Längsträger eines Fahrzeuges eingesetzt werden und welche bei einem Aufprall bis zu 4 km/h schadensfrei bleiben und bei einem Aufprall bis zu 15 km/h die gesamte Bewegungsenergie aufnehmen und in Verformung umsetzen. Solche Deformationselemente sind in der Regel in den Längsträgern zu einer einheitlichen Tragstruktur integriert, so daß bei deren Beschädigung die gesamten Längsträger ausgetauscht werden müssen. Die Aufnahme von im wesentlichen der gesamten Bewegungsenergie durch die Deformationselemente, ohne daß wesentliche Teile dieser Deformationsenergie auf die restlichen Strukturen eines Kraftfahrzeuges übertragen werden, ist eine Forderung, welche auch im Hinblick auf die Erhöhung der Überlebenschancen von Personen bei verunglückten Fahrzeugen erfüllt werden muß.

In der Technik sind zahlreiche Anwendungen von Wabenstrukturen für unterschiedliche Anwendungsfälle bekannt. So werden Wabenstrukturen beispielsweise im Flugzeugbau eingesetzt, wo insbesondere Forderungen nach Leichtbauweise und hoher Festigkeit von Bedeutung sind. Des weiteren sind Wabenstrukturen aus Bereichen bekannt, wo weniger die Festigkeit einer solchen Wabenstruktur als vielmehr die Erhöhung der Oberfläche eine Rolle spielt, wie z.B. bei Katalysator-Trägerkörpern im Abgassystem eines Kraftfahrzeuges zur Abreinigung von im Abgas nach der Verbrennung im Motor noch verbliebenen schädlichen Abgasbestandteilen.

Aus DE-U-89 00 467, EP 0 389 751 A1, GB-2 029 720 A, DE 40 24 942 A1, DE 38 09 490 C1, DE 44 45 557 A1 sind unterschiedliche Konfigurationen und Strukturen von Wabenkörpern bekannt. Diese beschriebenen Wabenkörper dienen in der Regel dem Zweck, die Strömungseigenschaften im Inneren der als Strömungskanäle ausgebildeten Kanäle zu verbessern. Die den eigentlichen Matrixkörper umgebenden Ummantelungen dienen der Abdichtung und der Aufnahme von hohen thermischen Belastungen, welchen ein derartiger Katalysator-Trägerkörper im Abgassystem eines Kraftfahrzeuges ausgesetzt ist.

Aus der DE 196 50 647 A1 ist ein Deformationselement für ein Kraftfahrzeug bekannt, bei welchem ein an sich bekannter Wabenkörper, welcher in einem Mantelrohr angeordnet ist, als Deformationselement eingesetzt ist.

Nachteilig bei den bekannten Deformationselementen ist, daß sie entweder vollständig in die Tragstrukturen integriert sind, weshalb im Schadensfall die gesamte Tragstruktur ausgewechselt werden muß, oder daß beim Einsatz von Deformationselementen mit Wabenstruktur im Falle von eingeleiteter hoher Bewegungsenergie relativ rasch der durch die sogenannte Restblocklänge erreichte maximale Deformationsweg erreicht wird und nach Erreichen des maximalen Deformationsweges ein steiler Anstieg der Kurve im Deformationskraft-Deformationsweg-Profil (F,s-Profil) auftritt, welcher bedeutet, daß die auftretenden hohen Deformationskräfte direkt in die Tragstruktur weitergeleitet werden.

Es ist daher die Aufgabe der vorliegenden Erfindung, eine Tragstruktur mit einem Deformationselement zur Absorption von Bewegungsenergie zu schaffen, welches gegenüber herkömmlichen Deformationselementen eine verminderte Restblocklänge aufweist und welches insbesondere entsprechend der jeweiligen anwendungsspezifischen Auslegung ein gewünschtes F,s-Profil gewährleistet und welches besonders für Stoßfängersysteme von Fahrzeugen einsetzbar ist.

Diese Aufgabe wird durch eine Tragstruktur mit einem Deformationselement zur Absorption von Bewegungsenergie mit den Merkmalen gemäß Anspruch 1 gelöst.

Zweckmäßige Weiterbildungen sind in den abhängigen Ansprüchen definiert.

Gemäß der Erfindung weist die Tragstruktur ein Deformationselement, insbesondere für Kraftfahrzeuge, zur Absorption von Bewegungsenergie bei einem Aufprall auf, welches zumindest einseitig an der Tragstruktur abgestützt ist. Das Deformationselement weist einen wabenförmigen Matrixkörper auf, welcher in einer Ummantelung aufgenommen ist. Gemäß der Erfindung ist das Deformatiocaselement zumindest an einer Stirnseite, an welcher sich eine Abstützung an der Tragstruktur befindet, mit einer Lochplatte mit zumindest einem Loch versehen. Das zumindest eine Loch der Lochplatte ist so dimensioniert, daß im Bereich des Loches befindliche Teile des Matrixkörpers bei eingeleiteter hoher Bewegungsenergie in Richtung des Deformationsweges in das Loch bzw. durch das Loch versetzbar sind. Das Versetzen von im Bereich des Loches befindlichen Teilen des Matrixkörpers durch das Loch bzw. in das Loch hinein in Richtung des Hauptdeformationsweges kann dabei einerseits auftreten, nachdem vorher die Restblocklänge des Deformationselementes im wesentlichen erreicht worden ist. Vorzugsweise ergibt sich andererseits jedoch bereits vor Erreichen dieser Restblocklänge ein Abscheren von einzelnen Elementen des Matrixkorpers im Bereich des Randes der Löcher, so daß Teile des Matrixkörpers in das Loch ein- bzw. durch dieses hindurchtreten. Dies tritt auf, selbst wenn das Deformationselement noch eine gewisse Restporosität aufweist. Die Ummantelung um den Matrixkörper ist dabei so ausgebildet, daß sie sich gleichmäßig, vorzugsweise ringartig faltet. Der wesentliche Vorteil dieser erfindungsgemäßen Ausbildung besteht unter anderem darin, daß sich der maximale Deformationsweg bei Vorhandensein einer Abschlußplatte mit mindestens einem Loch erhöht, da das Loch in der Lochplatte bewirkt, daß unter der Wirkung von Deformations- und Scherkräften Teile des Matrixkörpers, welche im Bereich des Loches angeordnet sind, sich beim Einleiten von Bewegungsenergie in das Loch hineinschieben bzw. sich auch durch das Loch hindurch schieben. Dadurch tritt im F,s-Profil der steile Anstieg bei Erreichen der Restblocklänge gegenüber einem Deformationselement mit geschlossener, an dessen Stirnseite angeordneter Abdeckplatte bzw. bei dessen kompletter stirnseitiger Anlage an der Abstützung der Tragstruktur bei erfindungsgemäßen Anordnungen erst später nach einem längeren Deformationsweg auf.

Vorzugsweise weist die Lochplatte mehrere Löcher auf, welche in der Fläche der Lochplatte gleichmäßig oder ungleichmäßig verteilt sein können. Die Löcher müssen dabei nicht rund sein, sondern können andere Form haben, insbesondere Segmentförmig sein. Die Größe der Locher ist dabei vorzugsweise so bemessen, daß unter der Wirkung der Deformations- und Scherkräfte beim Einleiten von Bewegungsenergie die im Bereich der Locher angeordneten Teile des Matrixkörpers sich im wesentlichen in alle Löcher hinein bzw. durch diese hindurchschieben können.

Bei Wabenkörpern aus zumindest teilweise strukturierten Blechlagen, die kanalartige Strukturen bilden und im wesentlichen etwa in Richtung der Deformationskraft verlaufen, aus denen Matrixkörper für erfindungsgemäße Anordnungen bevorzugt hergestellt werden, werden vorzugsweise die Ränder der Löcher so ausgebildet, daß sie über möglichst viele Blechlagen verlaufen, d h. diese kreuzen Dies ist erforderlich, damit die im Bereich des Lochrandes befindlichen Blechlagen des Matrixkörpers mittels Scherkräften abgeschert werden und nicht einzelne Teile des Matrixkörpers ohne Abscheren durch das Loch hindurch versetzt werden.

Besonders bevorzugt sind Löcher im Außenbereich der Lochplatte angeordnet. Dies hat den Vorteil, daß dadurch ein Zusammenwirken von Ummantelung und Matrixkörper beim Deformieren realisierbar ist. Indem insbesondere im Außenbereich Teile des Matrixkörpers durch die Löcher der Lochplatte in Richtung des Deformationsweges versetzbar sind, ist es möglich, daß das dadurch verfügbare zusätzliche Volumen durch die von der Ummantelung bei der Deformation aufgebrachte Seitenkraft gefüllt wird. Dadurch ist wiederum eine Verkürzung der Restblocklänge erzielbar.

Gemäß einem weiteren bevorzugten Ausführungsbeispiel sind ca. 20 bis 80%, vorzugsweise 40 bis 60%, der Gesamtfläche der Lochplatte als Löcher ausgebildet. Dadurch ist genügend Freiraum gegeben, durch welchen bzw. in welchen abgescherte Teile des Matrixkörpers beim Einleiten von hoher Bewegungsenergie durch die Lochplatte hindurchtreten können. Vorzugsweise sind die Ränder der Löcher so ausgebildet, daß sie über mindestens zehn Blechlagen verlaufen. Beispielsweise kann bei Vorsehen eines einzigen Loches bei einem Durchmesser des Matrixkörpers von 90 mm der Lochdurchmesser ca. 55 mm betragen. Je nach Einsatzzweck und gewünschtem F,s-Profil können die entsprechenden Löcher in der Lochplatte bezüglich ihrer Anordnung und bezüglich ihrer Größe jedoch davon abweichen.

Gemäß einer weiteren Ausbildung ist die Lochplatte vorzugsweise mit ihrem Rand in die Abstützung der Tragstruktur integriert, so daß ausreichende Stützkräfte vorhanden sind und andererseits eine hohe Deformationsenergie eingeleitet werden kann.

Gemäß einer Weiterbildung der Erfindung ist die Ummantelung in Form von mehreren separaten Mantelringen oder in Form eines durchgängigen Mantelrohres mit Sollknickstellen ausgebildet. Je nach Ausbildung der Ummantelung wird in mehr oder weniger starkem Maße die Bewegungsenergie von sowohl dem Matrixkörper, als auch der Ummantelung aufgenommen. Das Deformationselement ist in der Tragstruktur einseitig oder beidseitig so abgestützt bzw. gehalten, daß die zu absorbierende Bewegungsenergie im wesentlichen in Längsrichtung des Deformationselementes einleitbar ist.

Durch die Ausbildung des wabenförmigen Matrixkörpers mit einer Vielzahl von Kanälen, durch die Ausbildung einer Lochplatte mit definiert dimensionierten Löchern, durch die Materialstärken und Materialarten usw. besteht eine hohe Entwurfsflexibilität im Hinblick auf die Erzielung spezieller, auf jeweilige Anwendungsfälle ausgerichtete Dimensionierungen des erfindungsgemäßen Deformationselementes. Es ist somit möglich, ein gewünschtes F,s-Profil zu realisieren.

Wenn das Deformationselement rohrförmig ausgebildet ist, so wird dies auch als Deformationsrohr (DEFO-Rohr) bezeichnet. Prinzipiell wird das Deformationselement mittels einer entsprechenden Formgebung und Wahl der oben genannten Parameter so ausgebildet, daß ein möglichst langer Verformungsweg bei gegebenen Bauteilabmessungen erzielt wird. Dies ist beispielsweise möglich, indem zur Aufnahme der Bewegungsenergie die Ummantelung und/oder die Matrix gefaltet bzw. komprimiert werden.

Ein weiterer Vorteil eines derartigen erfindungsgemäßen Deformationselementes besteht darin, daß über ein spezielles Design des Deformationselementes einschließlich seiner Ummantelung eine leichte Montage bzw. Demontage erzielt werden kann. Des weiteren dient das jeweilige Design der Ummantelung sowie der jeweiligen Wabenstruktur des Matrixkorpers der Erzielung von Tragfähigkeitseigenschaften, welche gewährleistet werden müssen, wenn das erfindungsgemäße Deformationselement in Rahmen- bzw. Tragstrukturen integriert bzw. eingebettet ist, so daß Belastungen übertragbar sind, bei denen das Deformationselement auch die bei Stoßbelastung auftretende Bewegungsenergie aufzunehmen in der Lage ist. Des weiteren kann über eine geeignete Materialauswahl, falls der jeweilige Einsatzzweck dies erfordert, korrosionsfestes Material für das erfindungsgemäße Deformationselement verwendet werden Es ist jedoch auch möglich, aus Kostengründen auf korrosionsfeste Materialien zu verzichten und die für das erfindungsgemäße Element verwendeten Materialien mit an sich bekannten Korrosionsschutzüberzügen zu versehen.

Sowohl über die Auslegung der Matrix als auch der Ummantelung kann somit das jeweilige F,s-Profil zielgerichtet beeinflußt werden. Eine im wesentlichen glatte Ummantelung dient beispielsweise einer hohen Tragfähigkeit. Beispielsweise kann, wenn die Ummantelung als Streckgitter ausgebildet ist, Lochungen oder Unterbrechungen aufweist, ein maximaler Deformationsweg realisiert werden. Über die Anordnung von Sicken, Kerben, Nuten usw. in der Ummantelung kann das spezielle Deformationsverhalten des Deformationselementes ebenfalls zielgerichtet beeinflußt werden. Die Festigkeit kann weiterhin über die jeweilige Dicke der Ummantelung bzw. über den für die Ummantelung ausgewählten Werkstoff beeinflußt werden.

Über die Auslegung des Matrixkörpers kann das Deformationsverhalten auch dadurch zielgerichtet beeinflußt werden, daß beispielsweise Blechlagen mit transversalen Strukturen eingesetzt werden. Ein maximaler Verformungsweg läßt sich erreichen, indem die einzelnen Blechlagen Lochungen, Schlitze oder Longitudinalstrukturen aufweisen. Die Festigkeit bzw. das Gewicht des erfindungsgemäßen Deformationselementes kann ferner über dessen Zelldichte, die Foliendicke, den Wickeltyp des Matrixkörpers zielgerichtet beeinflußt werden. Auch ist dies beispielsweise über Schrägwellungen über die Anordnung in Form eines Kreuzwickels möglich. Es ist des weiteren auch möglich, den Matrixkörper so auszubilden, daß die radiale Steifigkeit am Rand herabgesetzt wird.

Gemäß einem weiteren Ausführungsbeispiel weist die Ummantelung eine Sicke oder mehrere im wesentlichen quer zu den Kanalen der Matrix angeordnete Sicken auf. Diese Sicken haben den Vorteil, daß bei im wesentlichen in Längsrichtung des Deformationselementes eingeleiteter Bewegungsenergie die Sicken zum einen eine gewisse Anfangselastizitat aufweisen und zum anderen Stellen darstellen, an welchen der Mantel zuerst Bewegungsenergie aufnimmt, indem bei entsprechend vorhandenen Deformationskräften die Schenkel einer jeweiligen Sicke aufeinandergefaltet werden, bevor die zwischen den Sicken im wesentlichen glatten Bereiche des Mantels einer direkten weiteren Verformung ausgesetzt sind. Diese Sicken stellen somit Solldeformationsstellen dar. Die Ummantelung des Matrixkörpers weist je nach Anwendung und je nach aufzunehmender Höhe der Bewegungsenergie eine Dicke von 0,3 mm bis 2,0 mm, vorzugsweise 0,5 bis 1,0 mm auf. Für sehr hohe aufzunehmende Bewegungsenergien sind jedoch auch größere Dicken möglich und sinnvoll. Bei Verwendung von Aluminium als Mantelmaterial liegen bevorzugte Dicken zwischen 0,5 und 2,0 mm, bei weichem Stahl, insbesondere Tiefziehstahl bei 0,3 bis 1,5 mm. Vorzugsweise weisen die gewellten Blechlagen des Matrixkörpers eine Dicke von etwa 0,02 mm bis 0,2 mm, insbesondere 0,1 bis 0,16 mm, auf, wobei bevorzugt Aluminium mit einer Dicke von 0,05 bis 0,2 mm, aber auch Stahl einer Dicke von 0,02 bis 0,15 mm, insbesondere 0,1 mm, als Material eingesetzt wird. Die Wellungen sind so ausgebildet, daß der Matrixkörper eine Zelldichte von 50 bis 600 cpsi (cells per square inch) aufweist.

Vorzugsweise besteht die Matrix dabei in an sich bekannter Weise beispielsweise aus gepackten flachen und gewellten Blechlagen oder aus einem spiralig, doppelspiralig oder S-förmig im wesentlichen zylindrisch gewickelten Paket. Die einzelnen im Paket aneinanderliegenden Blechlagen können, müssen jedoch nicht, an den Berührungsbereichen ganz oder teilweise verbunden, z. B. verklebt, verlötet oder verschweißt sein.

Gemäß einer weiteren Ausgestaltung variiert die Zelldichte des Matrixkörpers in Längsrichtung abschnittsweise. Dies wird beispielsweise dadurch erreicht, daß zusätzliche Blechlagen mit einer geringeren Wellungshöhe bzw geringerer Wellungsfrequenz als im entsprechenden benachbarten Abschnitt zwischen im wesentlichen glatten Blechlagen eingesetzt werden, wobei die glatten Blechlagen des Abschnitts mit der geringsten Zelldichte vorzugsweise in Längsrichtung der Matrix durchgängig angeordnet sind Es ist außerdem möglich, die Zelldichte der Matrix in radialer Richtung zu variieren, indem mindestens eine Blechlage mit kontinuierlich oder schrittweise in einer Richtung sich ändernder Wellhöhe zu einer im wesentlichen zylindrischen Wabenstruktur aufgewickelt wird, wie dies aus dem Stand der Technik bei Abgaskatalysatoren bekannt ist.

Gemäß einer weiteren Ausgestaltung weisen die Blechlagen der Matrix im wesentlichen quer zur Richtung der Kanäle sickenartige Strukturen auf, welche auch als Transversalstrukturen bezeichnet werden. Diese Transversalstrukturen dienen dazu, daß bei Einleitung einer entsprechend hohen Bewegungsenergie die Verformung im Inneren des Matrixkörpers an den Transversalstrukturen zuerst einsetzt, um somit ein möglichst gleichmäßiges Aufnehmen der Bewegungsenergie durch den Matrixkörper bzw. durch den Matrixkörper und die Ummantelung zu gewährleisten. Vorzugsweise sind diese Transversalstrukturen in Abständen von 2 mm bis 20 mm angeordnet.
Gemäß noch einem weiteren Ausfuhrungsbeispiel weisen die Blechlagen des Matrixkörpers, durch welche die Kanäle gebildet sind, innerhalb der Kanäle seitlich versetzte Kanalabschnitte auf, welche auch als Longitudinalstrukturen bezeichnet werden. Diese Longitudinalstrukturen liefern somit keine durchgehenden Kanäle, sondern unterbrochene Kanäle, so daß der Matrixkörper im Inneren eine Struktur aufweist, welche einer Wirbelzellenstruktur, wie sie unter anderem für Wärmeübertrager eingesetzt wird, entspricht. Diese Longitudinalstrukturen besitzen den Vorteil, daß zusätzlich uber die Länge der abschnittsweise versetzten Kanalabschnitte die die Bewegungsenergie absorbierenden Eigenschaften des erfindungsgemäßen Deformationselementes zielgerichtet beeinflußt werden können. Dadurch ist ein weiterer Parameter gegeben, das F,s-Profil anwendungsspezifisch zu beeinflussen.

Vorzugsweise ist es auch möglich, die Wellungen der Blechlagen in einer gekrümmten Anordnung oder einer Fischgrätanordnung oder in einer Kombination aus beiden vorzusehen. Dies erfordert keine glatten Blechlagen zwischen den gewellten Blechlagen. Mittels derartiger gekrummter Wellungen oder in Fischgrätanordnung ausgebildeter Wellungen der Blechlagen kann eine Verteilung der in das Innere des Matrixkörpers eingeleiteten, die Verformung bewirkenden Kräfte zielgerichtet erreicht werden, wodurch ebenfalls das F,s-Profil anwendungsspezifisch beeinflußbar ist.

Vorzugsweise ist gemäß einer Weiterbildung der Erfindung der Matrixkörper bzw. sind dessen Kanäle mit einem Schaummaterial ausgeschäumt, wobei vorzugsweise das Schaummaterial ein insbesondere korrosionshemmender Kunststoffschaum ist. Damit wird einerseits, wenn beispielsweise kein Edelstahl verwendet wird, verhindert, daß im inneren der Matrix und der Ummantelung Korrosion auftritt, welche die Deformationseigenschaften nachteilig beeinflussen könnte. Andererseits kann durch Auswahl eines entsprechenden Kunststoffschaumes mit definierten Eigenschaften auch die Absorptionsfähigkeit von Bewegungsenergie in dem Element zielgerichtet beeinflußt werden, so daß auch über das Einbringen eines Schaummaterials, das F,s-Profil beeinflußbar ist.

Vorzugsweise ist durch eine geeignete Vielzahl von Solldeformationsstellen im Deformationselement dessen F,s-Profil zumindest in einem Abschnitt, vorzugsweise in einem großen Abschnitt und noch bevorzugter das gesamte F,s-Profil im wesentlichen konstant ausgebildet.

Wenn beispielsweise eine Vielzahl von Solldeformationsstellen mit unterschiedlichen, bewegungsenergie-aufnehmenden Eigenschaften im Deformationselement vorgesehen wird, ist es auch möglich, im F,s-Profil zumindest einen Abschnitt vorzusehen, welcher progressiv ansteigend ist.

Im Hinblick auf einen bezüglich einer definierten Baulänge zu erzielenden maximalen Deformationsweg ist das Deformationselement bezüglich seines Deformationsverhaltens so ausgelegt, daß der maximale Deformationsweg zwischen etwa 60 und 200 mm liegt, Je nach Anwendungsfall kann der Deformationsweg auch kleiner oder großer als der angegebene Bereich sein.

Gemäß einem besonderen Aspekt der Erfindung werden metallische wabenförmige Matrixkörper in Verbindung mit der an der Stirnseite angebrachten Lochplatte als ein Deformationselement zur Absorption von Bewegungsenergie insbesondere in einem Stoßfängersystem eines Fahrzeuges verwendet. Das erfindungsgemäße Deformationselement mit der Lochplatte ist dabei so dimensioniert, daß im Bereich des Loches der Lochplatte befindliche Teile des Matrixkörpers in Richtung des Deformationsweges versetzbar sind. Das bedeutet, daß das erfindungsgemäße Deformationselement vorzugsweise mit einem solchen F,s-Profil dimensioniert ist, daß neben der Deformation der Matrix in sich eine weitere Deformation dadurch gegeben ist, daß Teile des Matrixkörpers in das Loch bzw. die Löcher einer Lochplatte hinein bzw. durch das Loch/die Löcher hindurch geschoben werden können. Beide Deformationsarten finden gleichzeitig statt, wobei Zahl, Verteilung und Größe der Löcher die Verteilung zwischen beiden Deformationsarten bestimmt. Damit ist es möglich, auch sehr hohe Bewegungsenergien einzuleiten, ohne daß die Tragstruktur beschädigt wird. Das gesamte Deformationspotential eines solchen Deformationselementes ist somit größer oder verteilt sich zumindest auf einen längeren Weg, ohne daß das Deformationselement selbst größer sein muß. Damit ist es auch möglich, das erfindungsgemäße Deformationselement als Montageteil auszubilden, welches im Falle von eingebrachter, in Verformung umgesetzter Bewegungsenergie mit geringem Montageaufwand demontierbar und durch ein neues Element ersetzbar ist. So wird nicht nur die Sicherheit bei Auffahrunfällen bzw. Aufprallereignissen erhöht, sondern es wird auch die Reparaturfreundlichkeit eines mit einem erfindungsgemäßen Deformationselement ausgerüsteten Stoßfängersystems eines Fahrzeuges erhöht.

Weitere Vorteile, Merkmale und Anwendungsmöglichkeiten der Erfindung werden nun anhand von Ausführungsbeispielen unter Bezugnahme auf die beigefügten Zeichnungen detailliert erläutert, wobei:
- Fig. 1: ein Deformationselement ohne Tragstruktur mit einer Ummantelung gemäß dem Stand der Technik im unverformten Zustand zeigt;
- Fig. 2: den Querschnitt durch ein Deformationselement zur Darstellung der Struktur des Matrixkörpers zeigt;
- Fig. 3: die Struktur des Matrixkörpers eines bekannten Deformationselementes gemäß Fig. 2 in verformtem Zustand zeigt;
- Fig. 4: eine Seitenansicht eines verformten bekannten Deformationskörpers zeigt;
- Fig. 5: eine Schnittansicht in Richtung der Kanäle des Matrixkörpers eines deformierten bekannten Deformationselementes zeigt;
- Fig. 6: eine Schnittansicht eines Deformationselementes gemäß der Erfindung mit vereinfachter Darstellung des Matrixkörpers zeigt;
- Fig. 7: das Deformationselement gemäß Fig. 6 in deformiertem Zustand zeigt;
- Fig. 8: die prinzipielle Anordnung eines durch die Tragstruktur einseitig aufgenommenen Deformationselementes gemäß der Erfindung zeigt;
- Fig. 9: den prinzipiellen Herstellungsvorgang eines wabenförmigen Matrixkörpers zeigt;
- Fig. 10: einen Schnitt in Richtung der Kanäle des wabenförmigen Matrixkörpers zeigt, wobei in Richtung der Kanäle eine unterschiedliche Zelldichte realisiert ist;
- Fig. 11: ein Deformationselement gemäß einem weiteren Ausführungsbeispiel der Erfindung mit einem Matrixkörper mit in radialer Richtung variierender Zelldichte zeigt;
- Fig. 12: eine prinzipielle Darstellung eines Mantelrohres zur Aufnahme eines zylindrischen wabenförmigen Matrixkörpers zeigt;
- Fig. 13: ein Deformationskraft-Deformationsweg-Profil (F,s-Profil) eines ersten Ausführungsbeispiels der Erfindung zeigt; und
- Fig. 14: ein F,s-Profil eines zweiten Ausführungsbeispiels gemäß der Erfindung zeigt.

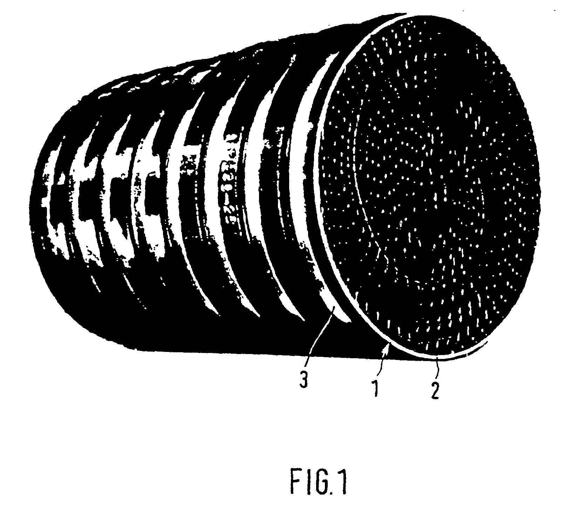

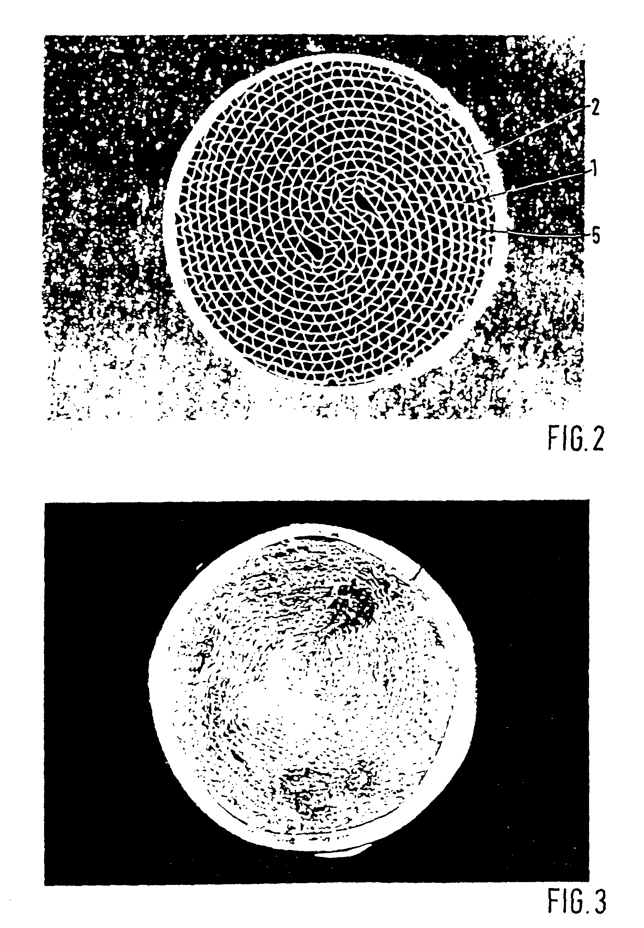

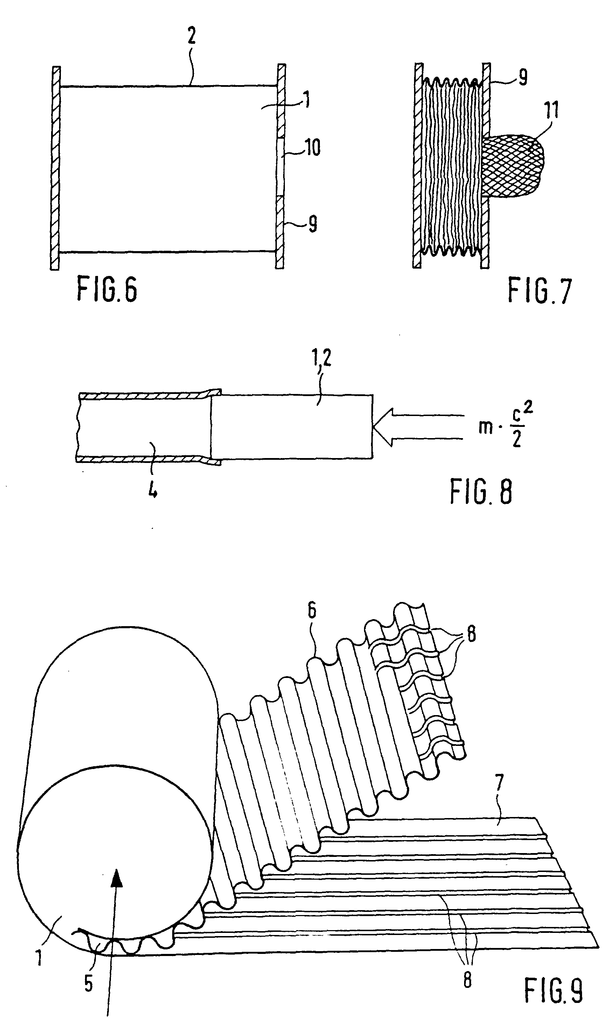

In den Fig. 1 bis 5 sind jeweils unverformte Deformationselemente (Fig. 1 und 2) und verformte Deformationselemente (Fig 3 bis 5) dargestellt Gemäß prinzipiellem Aufbau des Deformationselementes ist ein in abwechselnder Reihenfolge aus glatten und strukturierten Blechlagen spiralig gewickelter wabenförmiger Matrixkörper 1 mit einer Vielzahl von Kanälen ausgebildet. Dieser Matrixkörper ist in einer Ummantelung 2 aufgenommen, welche in Umfangsrichtung umlaufend und quer zur Erstreckungsrichtung der Kanäle angeordnete Sicken 3 aufweist. Dadurch ist das Deformationselement sehr kompakt ausgebildet. Das Deformationselement ist so in einer Tragstruktur 4 (siehe Fig. 8) angeordnet, daß die Bewegungsenergie, welche mit dem Deformationselement absorbiert werden soll, im wesentlichen in Richtung der Längserstreckung des Deformationselementes eingeleitet wird.

In Fig. 2 ist in einer Querschnittansicht der prinzipielle Aufbau des wabenförmigen Matrixkörpers dargestellt. Der wabenförmige Matrixkörper 1 entsteht dabei dadurch, daß in abwechselnder Reihenfolge glatte Blechlagen mit in Wellenform strukturierten Blechlagen doppeltspiralig aufgewickelt sind, so daß ein im wesentlichen zylindrischer Körper als Deformationselement entsteht. Dieses Deformationselement ist von einer Ummantelung 2 umgeben. Der wabenförmige Matrixkörper 1 bildet somit eine Vielzahl von Kanälen 5. Die die seitlichen Kanäle 5 begrenzenden Teile der jeweiligen Blechlage bilden Material, welches beim Einleiten von Bewegungsenergie sich in die jeweiligen Kanalräume deformieren kann, so daß ein derartiges Deformationselement Bewegungsenergie absorbieren kann. Die Bewegungsenergie wird dabei sowohl von dem wabenförmigen Matrixkörper 1 als auch von der Ummantelung 2 aufgenommen. Die Ummantelung kann jedoch auch so ausgebildet sein, daß sie nicht bzw. nicht wesentlich zur Aufnahme von Bewegungsenergie dient, sondern lediglich als radialer Verformungsbegrenzer ausgebildet ist.

Nach Aufnahme der Bewegungsenergie, d h. nachdem sich die die Kanäle seitlich begrenzenden Teile der jeweiligen Blechlagen in die in den Kanälen vorhandenen Freiräume deformiert haben, komprimiert sich das Deformationselement, was theoretisch bis zu einem Grade möglich ist, bei welchem die durch die Kanäle 5 gebildeten Freiräume vollständig mit Material angefüllt sind In Fig. 3 ist ein unter labortechnischen Bedingungen deformiertes Deformationselement dargestellt. Ersichtlich aus Fig. 3 ist, daß die Vielzahl von Kanälen mit in den Freiraum der Kanäle 5 deformiertem Material im wesentlichen geschlossen ist. Das Deformationselement wurde dabei soweit deformiert, daß die sogenannte Restblocklänge erreicht ist.

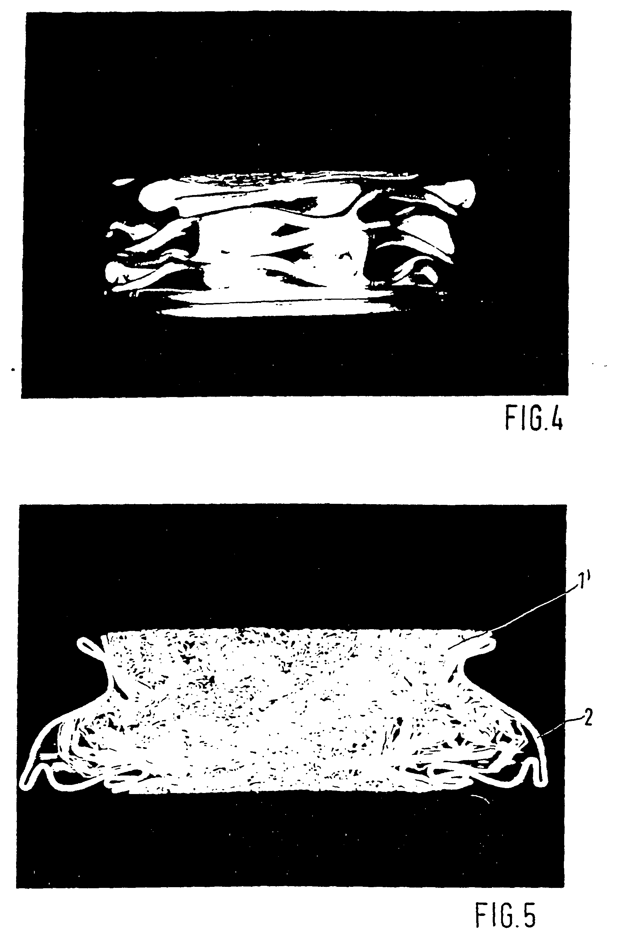

Fig. 4 zeigt eine Seitenansicht eines Deformationselementes, nachdem es soviel Deformationsenergie aufgenommen hat, daß die Restblocklänge im wesentlichen erreicht ist. Aus Fig. 4 ist ersichtlich, wie sich die Ummantelung 2 des Deformationselementes am Außenumfang faltet.

In Fig. 5 ist ein bis zur Restblocklänge komprimiertes Deformationselement dargestellt. Bei diesem komprimierten Deformationselement sind die Kanäle in der Matrixstruktur 1' weitgehend mit Material angefüllt, so daß ein weiteres Komprimieren über diese Restblocklange hinaus nur mit einem extremen Anstieg der zur weiteren Kompression erforderlichen Kraft möglich ist. Für praktische Einsatzzwecke bedeutet dies, daß bei Erreichen dieses im wesentlichen den Enddeformationszustand des Deformationselementes darstellenden Zustandes selbst bei starkem Anstieg der eingeleiteten Kräfte kaum noch Deformationsvermögen vorhanden ist und damit eine Schädigung der Tragstruktur, an welcher das Deformationselement abgestützt ist, auftreten kann.

In Fig. 6 ist ein erfindungsgemäßes Deformationselement zur Verwendung in einer Tragstruktur gemäß der Erfindung dargestellt. Das Deformationselement ist im Schnitt dargestellt, wobei aus Grunden der vereinfachten Darstellung der Schnitt durch den an sich bekannten Matrixkorper ohne Darstellung der einzelnen Kanäle bzw. Hohlräume des Matrixkörpers 1 dargestellt ist Der Matrixkorper 1 ist mit einer Ummantelung 2 umgeben. Prinzipiell ist es jedoch auch möglich, daß der Matrixkörper 1 selbsttragend ist und das eigentliche Deformationselement darstellt. Das dargestellte Deformationselement ist in die Tragstruktur so eingebaut, daß die Bewegungsenergie von links eingeleitet wird Beim Einleiten von Bewegungsenergie nimmt das Deformationselement die Bewegungsenergie auf und setzt sie in entsprechende Deformationsenergie um, so daß sich ein definierter Deformationsweg ergibt. Die Stirnseiten des Deformationselementes sind mit jeweiligen Stützplatten abgedeckt. Die der Einleitung der Bewegungsenergie gegenüberliegende Stirnseite des Deformationselementes ist in Form einer Lochplatte 9 ausgebildet, welche im zentralen Bereich ein Loch 10 aufweist. Das Loch 10 ist groß genug ausgebildet, daß sich infolge der Deformations- und Scherkräfte beim Einleiten entsprechend hoher Bewegungsenergien das Deformationselement auch bei Erreichen der Restblocklänge noch weiter komprimieren läßt, d.h. daß noch weitere Deformationsenergie aufgenommen werden kann.

Gemäß Fig. 7 wird dies dadurch erreicht, daß sich bei Erreichen der Restblocklänge Material des Matrixkörpers, welches sich im Bereich des Loches 10 der Lochplatte 9 befindet, bei entsprechend großer eingeleiteter Bewegungsenergie längs des Deformationsweges durch das Loch 10 hindurchschieben und damit aus dem eigentlichen Deformationselement herausschieben kann. Dadurch entsteht ein zumindest teilweise abgescherter Materialteil 11, welcher gewährleistet, daß die Restblocklänge eines derartigen erfindungsgemäßen Deformationselementes bei gegebenen Bauabmessungen weiter verringert werden kann. Dadurch können höhere Deformationsenergien aufgenommen werden, ohne daß die Gefahr besteht, daß die Tragstruktur, an welcher das Deformationselement abgestützt ist, Schaden nimmt.

Aus den Fig. 1 bis 7 ist ersichtlich, daß über die Parameter Ummantelungsdesign (Wandstärke, mit oder ohne Mantelsicken), Matrixkörperdesign (Zelldichte, Dicke der Blechlage) und Matrixkörpermaterial (Standardmaterial, TS-Standard oder walzplattiertes Band) das F,s-Profil des erfindunsggemäßen Deformationselementes gezielt für den jeweiligen Einsatzfall beeinflußbar ist.

Fig. 8 zeigt die prinzipielle Anordnung eines durch eine Tragstruktur 4 aufgenommenen Deformationselementes. Das Deformationselement ist dabei einseitig von der Tragstruktur 4 abgestützt. Auf der der Abstützstelle gegenüberliegenden Seite des Deformationselementes wird die Bewegungsenergie eingeleitet, welche durch m x c²/2 dargestellt ist. Die Aufgabe des Deformationselementes besteht darin, die eingeleitete Bewegungsenergie in Verformung umzusetzen, wobei diese Verformung im Auslegungsfall des Deformationselementes nur durch dieses selbst aufgenommen werden soll, ohne daß die Tragstruktur 4 deformiert bzw. beschädigt wird. Ein so dimensioniertes Deformationselement bildet somit ein Austauschteil, welches in der Tragstruktur 4 so abgestützt ist, daß es leicht demontiert und durch ein neues ersetzt werden kann. Dies spielt insbesondere eine große Rolle bei Kraftfahrzeugen, wenn ein derartiges Deformationselement für ein Stoßfängersystem eingesetzt ist.

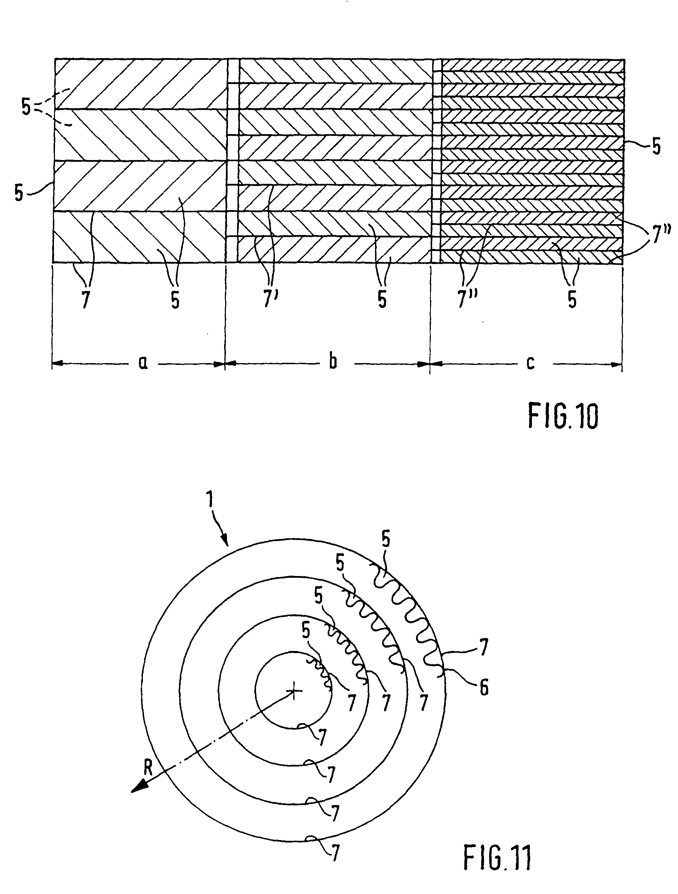

In Fig. 9 ist ein weiteres Ausführungsbeispiel für den prinzipiellen Aufbau einer Matrixstruktur für ein Deformationselement gezeigt. Die wabenförmige Matrixstruktur weist einen Aufbau auf, bei welchem strukturierte, mit einer Wellung 6 versehene Blechlagen in abwechselnder Reihenfolge mit im wesentlichen glatten Blechlagen 7 spiralig zu einer im wesentlichen zylindrischen Form des wabenförmigen Matrixkörpers 1 gewickelt sind. Durch die Wellungen 6 weist der wabenförmige Matrixkörper 1 Kanäle 5 auf, welche sich in Richtung des in Fig. 9 gezeigten Pfeils erstrecken. Darüber hinaus weisen sowohl die gewellten Blechlagen 6 als auch die im wesentlichen glatten Blechlagen 7 des Matrixkörpers 1 zusätzlich Mikrostrukturen 8 auf, welche im wesentlichen quer zur Längserstreckung der Kanäle 5 verlaufen. Diese Mikrostrukturen 8 stellen für den Deformationsvorgang bei Einwirken entsprechender Bewegungsenergie Solldeformationsstellen dar, durch welche insbesondere zu Beginn des Deformationsvorganges ein ansonsten auftretender, sich im F,s-Profil darstellender übermäßiger Peak abbaubar ist.

In Fig. 10 ist ein weiteres Ausführungsbeispiel dargestellt. Bei diesem Ausführungsbeispiel weist das Deformationselement drei Bereiche a, b, c auf, in welchen jeweils unterschiedliche Zelldichten realisiert sind. Die Darstellung gemäß Fig. 10 ist ein Schnitt in Richtung der Kanale 5. In Richtung der Kanäle 5 erstrecken sich über die Länge des Deformationselementes a + b + c glatte Blechlagen 7. Im Abschnitt a ist zwischen glatten Blechlagen 7 jeweils eine strukturierte Blechlage mit einer Amplitude angeordnet, welche dem in radialer Richtung gemessenen Abstand zwischen den glatten Blechlagen 7 entspricht. Im Abschnitt b und c sind zusätzlich glatte Blechlagen 7' zwischen den Blechlagen 7 angeordnet, wobei zwischen den glatten Blechlagen 7 und 7' im Abschnitt b gewellte Blechlagen angeordnet sind, welche eine Amplitude aufweisen, welche dem Abstand zwischen den Blechlagen 7 und 7' entspricht. Im Abschnitt c sind zusätzlich zwischen den geraden Blechlagen 7 und 7' weitere gerade Blechlagen 7" angeordnet, so daß zwischen den geraden Blechlagen 7, 7' und 7" gewellte Blechlagen angeordnet sind, deren Amplitude dem Abstand zwischen den geraden Blechlagen 7 und 7" bzw. 7" und 7' entsprechen. Dadurch entsteht ein in Längsrichtung der Kanäle 5 mit einer variierenden Zelldichte ausgebildetes Deformationselement. Der Vorteil eines solchen Deformationselementes mit variierender Zelldichte besteht darin, daß das F,s-Profil in einzelnen Bereichen des Deformationselementes abschnittsweise gezielt beeinflußbar ist. Damit wird wiederum die Flexibilität der Anwendungsmöglichkeiten des Deformationselementes gemäß der Erfindung erhöht.

Fig. 11 zeigt ein weiteres Ausführungsbeispiel eines Deformationselementes, bei welchem die wabenartige Matrixstruktur aus im wesentlichen konzentrisch verlaufenden, abwechselnd angeordneten glatten und strukturierten Blechlagen aufgebaut ist, wobei die strukturierten Blechlagen in der Amplitude ihrer Wellung in Richtung des Radius R von innen nach außen zunehmen. Aus Gründen der einfachen Darstellung ist nur ein Teil der glatten Blechlage und ein Teil der mit Wellungen versehenen strukturierten Blechlagen 6 eingezeichnet. Durch die Wellungen der strukturierten Blechlagen 6 werden die Kanäle 5 gebildet. Um eine vom Inneren einer zylindrischen Matrixstruktur 1 nach außen zunehmende Zelldichte zu erzielen, ist es auch möglich, daß der Matrixkörper 1 aus einer glatten Blechlage 7 und einer darauf angeordneten strukturierten Blechlage mit in einer Richtung zunehmender Amplitude der Wellung spiralig aufgewickelt ist. Dadurch entsteht eine kontinuierliche Zunahme der Zelldichte eines derartigen wabenförmigen Matrixkörpers 1 in Richtung des Radius R von innen nach außen.

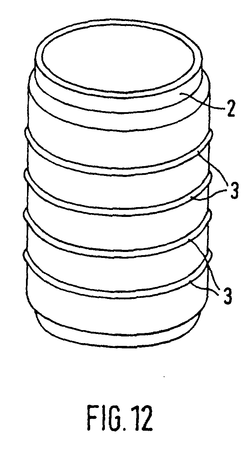

In Fig. 12 ist schematisch eine Ummantelung in Form eines Mantelrohres 2 für ein Deformationselement dargestellt, welches am Außenumfang umlaufende Sicken 3 aufweist. Um Deformationseigenschaften dieses Deformationselementes im Hinblick auf sein F,s-Profil gezielt zu beeinflussen, ist es des weiteren möglich, daß die Sicken 3 sich nur jeweils über einen Teilbereich des Umfanges des Mantelrohres 2 erstrecken oder daß diese Sicken auf einer Schraubenlinie um den Außenumfang des Mantelrohres 2 zumindest abschnittsweise umlaufen.

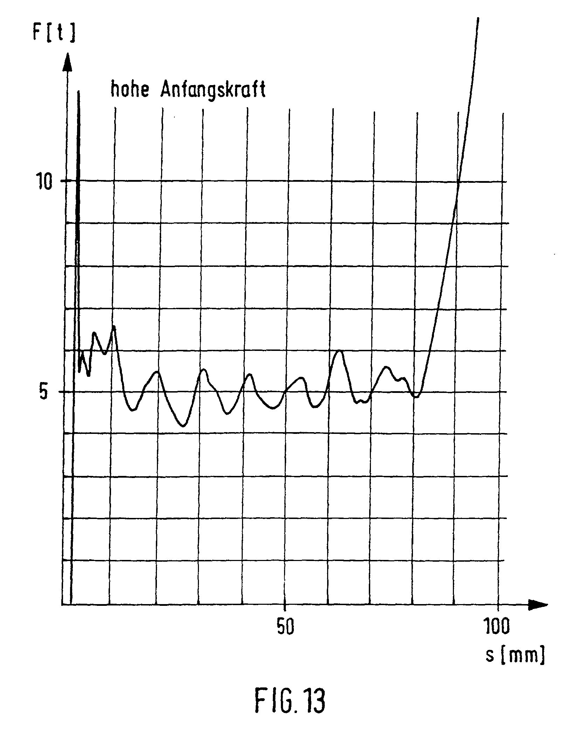

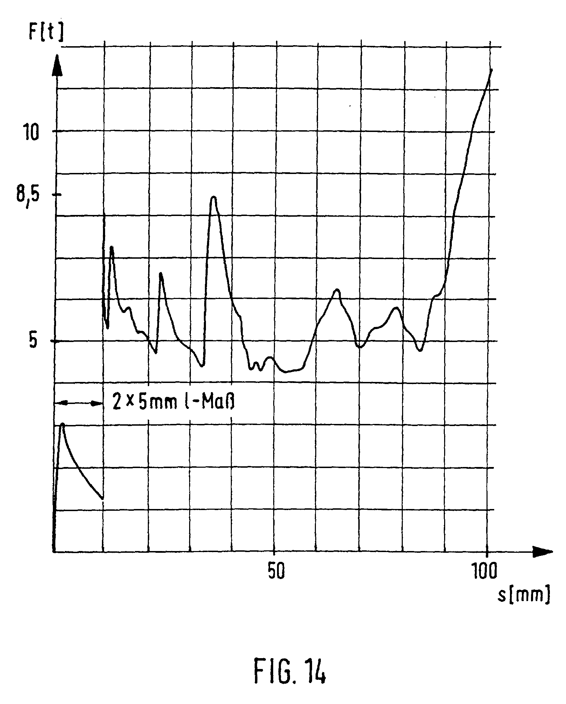

In den Fig. 13 und 14 ist jeweils ein F,s-Profil dargestellt. Diese F,s-Profile wurden durchgeführt mit dem Matrixkörpermaterial Standard, TS und walzplattiertes Band. Als Matrixkörperdesign wurden 160 cpsi, 100 cpsi und 0 cpsi untersucht. Als Ummantelungsdesign wurde ein Mantel ohne Sicken, ein Mantel mit drei Sicken und ein Mantel mit acht Sicken untersucht. Als Ummantelungswandstärke wurden 0,5 mm und 0,8 mm eingesetzt. Das untersuchte Deformationselement hatte eine zylindrische Form. Der Mantel besaß einen Überstand gegenüber dem eigentlichen wabenförmigen Matrixkörper von jeweils 5 mm auf jeder Seite. Eine Lochplatte war nicht vorgesehen.

Aus Fig. 13 ist ersichtlich, daß bei Beginn der Einleitung von entsprechender Bewegungsenergie im Deformationselement eine hohe Anfangskraft von ca. 130 kN als Spitzenkraft zu Beginn auftritt, bevor die eigentliche Deformation bei Kräften zwischen 40 und 65 kN stattfindet. Bei dem dargestellten F,s-Profil ist der Mittelbereich, welcher dem Anfangspeak folgt, im wesentlichen konstant ausgebildet, d.h. im Mittelbereich schwankt die Kraft lediglich in relativ geringem Maße um einen Mittelwert von ca 50 kN. Bei Erreichen des Endverformungszustandes (Restblocklanee), welcher bei dem untersuchten Deformationselement bei ca. 85 mm lag, setzt der Endanstieg ein. Das bedeutet, daß bei weiterer Erhöhung der Druckbelastung auf das Deformationselement kaum noch ein Deformationsweg auftritt. Hier setzt nun die Erfindung ein, indem eine Lochplatte angeordnet ist mit einem Loch, durch welches bei weiterer Druckbelastung infolge insbesondere von Scherkräften im Bereich des Loches liegende Teile des Matrixkörpers durch das Loch geschoben werden, so daß ein weiterer Deformationsweg und damit eine verringerte Restblocklänge erzielt werden kann.

Werden zusätzliche Sicken in den Mantel eingebracht, wie es in Fig. 1 dargestellt ist, so verformen sich erst die Sicken. Das bedeutet, daß zunächst der Matrixkörper in der Ummantelung gleitet, bis die jeweiligen Schenkel der Sicken unter einer Kraft von ca. 25 bis 10 kN (siehe Fig 14) aufeinandergefaltet sind. Erst danach erfolgt gemäß Fig. 14 ein Sprung, welcher den eigentlichen Anfangspeak darstellt, auf ca. 85 kN. Indem die Materialdicke der Ummantelung von 0,8 mm auf 0,5 mm reduziert wird, kann der Anfangspeak, d h die Anfangskraft abgesenkt werden. Bedingt durch das dünnere Mantelmaterial ist die verbleibende Resthöhe eines derartigen flachgedrückten Deformationselementes etwas geringer als bei einem Mantelmaterial mit einer Dicke von 0,8 mm. Das bedeutet, daß der maximale Deformationsweg größer ist.

Bei einer Stärke der Ummantelung von 0,8 mm und einer Anordnung von drei Sicken kann ebenfalls die Hohe des Anfangspeaks gesenkt werden. Bei einer Anordnung von acht Sicken in einer Ummantelung mit einer Dicke von 0,8 mm konnte der Anfangspeak nicht weiter reduziert werden.

Wenn die Ummantelung mit einem Uberstand von jeweils 5 mm auf jeder Stirnseite des Matrixkörpers vorgesehen ist. so wirkt dieser Uberhang als Deformationsvorstufe.

Während das F,s-Profil gemäß Fig. 14 für einen Matrixkorper mit 100 cpsi aufgenommen wurde, entspricht das F,s-Profil gemäß Fig. 13 einem Matrixkörper mit 160 cpsi. Daraus ist ersichtlich. daß mit steigender Zelldichte die mittlere Verformungskraft im Mittelbereich des F,s-Profils nicht nur verringert, sondern auch deutlich gleichmäßiger ausgebildet werden kann Ein gleichmaßig ausgebildeter Mittelbereich des F,s-Profils hat den Vorteil daß die Bewegungsenergie durch das Deformationselement gleichmäßig absorbiert wird, was die Belastungen für die das Deformationselement abstützende Tragstruktur und damit das Risiko, daß diese Tragstruktur beschädigt wird, verringert.

Gegenüber Standardmaterial kann bei Verwendung eines Materials für die strukturierte Blechlage in TS-Wellung die mittlere Deformationskraft im Mittelbereich des F,s-Profils ebenfalls reduziert werden. Eine weitere Reduzierung ist erreichbar, indem anstelle der TS-Wellung walzplattiertes Band verwendet wird.

### Bezugszeichenliste

- 1: Matrixkörper
- 2: Ummantelung
- 3: Sicken
- 4: Tragstruktur
- 5: Kanal
- 6: mit einer Wellung versehene Blechlagen
- 7: glatte Blechlagen
- 8: Mikrostrukturen
- 9: Lochplatte
- 10: Loch
- 11: abgescherter Materialteil

## Patentansprüche

1. Tragstruktur (4) mit einem Deformationselement, insbesondere für ein Kraftfahrzeug, zur Absorption von Bewegungsenergie bei einem Aufprall, welches zumindest einseitig an der Tragstruktur (4) abgestützt ist und einen wabenförmigen Matrixkörper (1) mit einer Ummantelung (2) aufweist,
**dadurch gekennzeichnet, daß**
das Deformationselement zumindest an einer Stirnseite, an welcher es an der Tragstruktur (4) abgestützt ist, eine Lochplatte (9) mit zumindest einem Loch (10) aufweist, das so dimensioniert ist, daß im Bereich des Loches (10) befindliche Teile des Matrixkörpers (1) in Richtung des Deformationsweges in das Loch (10) hinein und/oder durch dieses hindurch versetzbar sind.

2. Tragstruktur nach Anspruch 1, **dadurch gekennzeichnet, daß** die Lochplatte (9) mehrere gleichmäßig verteilte Löcher (10) aufweist.

3. Tragstruktur nach Anspruch 1 oder 2, **dadurch gekennzeichnet, daß** der Matrixkörper (1) aus Blechlagen (6, 7) gebildet ist und der Rand des jeweiligen Loches über mehrere Blechlagen (6, 7) verläuft.

4. Tragstruktur nach einem der Ansprüche 1 bis 3, **dadurch gekennzeichnet, daß** die Löcher (10) im Außenbereich der Lochplatte (9) angeordnet sind.

5. Tragstruktur nach einem der Ansprüche 1 bis 4, **dadurch gekennzeichnet, daß** 20 bis 80%, vorzugsweise 40 bis 60 %, der Gesamtfläche der Lochplatte (9) Löcher (10) sind.

6. Tragstruktur nach einem der Ansprüche 3 bis 5 mit aus Blechlagen aufgebautem Matrixkörper (1), **dadurch gekennzeichnet, daß** die Größe und/oder die Form der Löcher (10) so ausgebildet sind, daß deren jeweiliger Rand mindestens fünf, vorzugsweise zehn, Blechlagen (6, 7) kreuzt.

7. Tragstruktur nach einem der Ansprüche 1 bis 6, **dadurch gekennzeichnet, daß** die Lochplatte (9) mit ihrem Rand in die Abstützung der Tragstruktur (4) integriert ist.

8. Tragstruktur nach einem der Ansprüche 1 bis 7, **dadurch gekennzeichnet, daß** die Ummantelung (2) mehrere separate Mantelringe aufweist.

9. Tragstruktur nach einem der Ansprüche 1 bis 7, **dadurch gekennzeichnet, daß** die Ummantelung (2) als Mantelrohr durchgängig mit Sollknickstellen (3) ausgebildet ist.

10. Tragstruktur nach Anspruch 9, **dadurch gekennzeichnet, daß** die Sollknickstellen (3) als im wesentlichen umlaufende Sicken (3) ausgebildet sind.

11. Tragstruktur nach einem der Ansprüche 1 bis 10, **dadurch gekennzeichnet, daß** die Ummantelung (2) eine Dicke von 0,3 mm bis 2,0 mm aufweist, vorzugsweise aus Aluminium einer Dicke von 0,5 bis 2,0 mm oder aus Stahl, insbesondere einem weichen Tiefziestahl, einer Dicke von 0,3 bis 1,5 mm besteht.

12. Tragstruktur nach einem der Ansprüche 1 bis 11, **dadurch gekennzeichnet, daß** der Matrixkörper (1) aus strukturierten, insbesondere zumindest teilweise gewellten Blechlagen (6, 7) mit einer Vielzahl von Kanälen (5) besteht, wobei die Blechlagen (6, 7) eine Dicke von 0,02 mm bis 0,2 mm aufweisen und der Matrixkörper (1) eine Zelldichte von 50 bis 600 cpsi (cells per square inch) besitzt, wobei die Blechlagen (6, 7) insbesondere aus Aluminiumblech einer Dicke von 0,1 bis 0,2 mm oder aus Stahlblech einer Dicke von 0,02 bis 0,15 mm, insbesondere etwa 0,1 mm, bestehen.

13. Tragstruktur nach Anspruch 12, **dadurch gekennzeichnet, daß** der Matrixkörper (1) aus zumindest teilweise strukturierten Blechlagen (6, 7) gestapelt ist.

14. Tragstruktur nach Anspruch 12, **dadurch gekennzeichnet, daß** der Matrixkörper (1) zu einem im wesentlichen zylindrischen Paket spiralig, etwa evolventenförmig oder S-förmig gewickelt oder geschlungen ist.

15. Tragstruktur nach einem der Ansprüche 12 bis 14, **dadurch gekennzeichnet, daß** die Zelldichte des Matrixkorpers (1) in Richtung der Kanäle (5) abschnittsweise variiert.

16. Tragstruktur nach einem der Ansprüche 12 bis 15, **dadurch gekennzeichnet, daß** die Blechlagen des Matrixkorpers (1) quer oder schräg zur Richtung der Kanäle (5) verlaufende sickenartige Strukturen (8) aufweisen.

17. Tragstruktur nach Anspruch 16, **dadurch gekennzeichnet, daß** die sickenartigen Strukturen (8) des Matrixkorpers (1) in Abständen von 2 mm bis 20 mm angeordnet sind.

18. Tragstruktur nach einem der Ansprüche 12 bis 17, **dadurch gekennzeichnet, daß**.. die Blechlagen des Matrixkorpers (1), durch welche die Kanale (5) gebildet sind, seitlich versetzte Kanalabschnitte aufweisen.

19. Tragstruktur nach einem der Ansprüche 12 bis 18, **dadurch gekennzeichnet, daß** die Wellungen der Blechlagen (6, 7) des Matrixkorpers (1) eine gekrümmte oder eine Fischgrät-Anordnung aufweisen.

20. Tragstruktur nach einem der Ansprüche 1 bis 19, **dadurch gekennzeichnet, daß** der wabenförmige Matrixkörper (1) mit einem Schaummaterial ausgeschäumt ist.

21. Tragstruktur nach Anspruch 20, **dadurch gekennzeichnet, daß** das Schaummaterial ein insbesondere korrosionshemmender Kunststoffschaum ist.

22. Tragstruktur nach einem der Ansprüche 1 bis 21, **dadurch gekennzeichnet, daß** das Deformationselement ein Deformationskraft-Deformationsweg-Profil aufweist, welches durch eine geeignete Vielzahl von Solldeformationsstellen (3) zumindest in einem Abschnitt konstant ausgebildet ist.

23. Tragstruktur nach einem der Ansprüche 1 bis 22, **dadurch gekennzeichnet, daß** das Deformationskraft-Deformationsweg-Profil durch eine in axialer Richtung sich ändernde Verteilung von Solldeformationsstellen (3) in zumindest einem Abschnitt progressiv ansteigend ausgebildet ist.

24. Tragstruktur nach einem der Ansprüche 1 bis 23, **dadurch gekennzeichnet, daß** der maximale Deformationsweg des Deformationselementes 60 bis 200 mm beträgt.

## Claims

1. A carrier structure (4) having a deformation element, in particular for a motor vehicle, for the absorption of kinetic energy in the event of an impact, which is supported at least at one end at the carrier structure (4) and has a honeycomb matrix body (1) with a casing (2), **characterised in that** at least at one end at which it is supported at the carrier structure (4) the deformation element has an apertured plate (9) with at least one hole (10) which is so dimensioned that parts of the matrix body (1) which are disposed in the region of the hole (10) can be displaced in the direction of the deformation travel into and/or through the hole (10).

2. A carrier structure according to claim 1 **characterised in that** the apertured plate (9) has a plurality of uniformly distributed holes (10).

3. A carrier structure according to claim 1 or claim 2 **characterised in that** the matrix body (1) is formed from sheet metal layers (6, 7) and the edge of the respective hole extends over a plurality of sheet metal layers (6, 7).

4. A carrier structure according to one of claims 1 to 3 **characterised in that** the holes (10) are arranged in the outer region of the apertured plate (9).

5. A carrier structure according to one of claims 1 to 4 **characterised in that** 20 to 80% and preferably 40 to 60% of the total area of the apertured plate (9) is holes (10).

6. A carrier structure according to one of claims 3 to 5 with a matrix body (1) constructed from sheet metal layers **characterised in that** the size and/or the shape of the holes (10) are such that the respective edge thereof crosses at least five and preferably ten sheet metal layers (6, 7).

7. A carrier structure according to one of claims 1 to 6 **characterised in that** the apertured plate (9) is integrated with its edge into the support of the carrier structure (4).

8. A carrier structure according to one of claims 1 to 7 **characterised in that** the casing has a plurality of separate casing rings.

9. A carrier structure according to one of claims 1 to 7 **characterised in that** the casing (2) is in the form of a casing tube throughout with desired-bend locations (3).

10. A carrier structure according to claim 9 **characterised in that** the desired-bend locations (3) are in the form of substantially peripherally extending beads (3).

11. A carrier structure according to one of claims 1 to 10 **characterised in that** the casing (2) is of a thickness of 0.3 mm to 2.0 mm, preferably of aluminium of a thickness of 0.5 to 2.0 mm or of steel, in particular a soft deep-drawing steel, of a thickness of 0.3 to 1.5 mm.

12. A carrier structure according to one of claims 1 to 11 **characterised in that** the matrix body (1) comprises structured, in particular at least partially corrugated sheet metal layers (6, 7) with a plurality of passages (5), wherein the sheet metal layers (6, 7) are of a thickness of 0.02 mm to 0.2 mm and the matrix body (1) has a cell density of 50 to 600 cpsi (cells per square inch), wherein the sheet metal layers (6, 7) comprise in particular aluminium sheet of a thickness of 0.1 to 0.2 mm or steel sheet of a thickness of 0.02 to 0.15 mm, in particular about 0.1 mm.

13. A carrier structure according to claim 12 **characterised in that** the matrix body (1) is stacked from at least partially structured sheet metal layers (6, 7).

14. A carrier structure according to claim 12 **characterised in that** the matrix body (1) is wound or twisted to form a substantially cylindrical packet in a spiral, approximately involute or S-shaped configuration.

15. , A carrier structure according to one of claims 12 to 14 **characterised in that** the cell density of the matrix body (1) varies in a portion-wise manner in the direction of the passages (5).

16. A carrier structure according to one of claims 12 to 15 **characterised in that** the sheet metal layers of the matrix body (1) have bead-like structures (8) extending transversely or inclinedly relative to the direction of the passages (5).

17. A carrier structure according to claim 16 **characterised in that** the bead-like structures (8) of the matrix body (1) are arranged at spacings of 2 mm to 20 mm.

18. A carrier structure according to one of claims 12 to 17 **characterised in that** the sheet metal layers of the matrix body (1) by which the passages (5) are formed have laterally displaced passage portions.

19. A carrier structure according to one of claims 18 to 28 **characterised in that** the corrugations of the sheet metal layers (6, 7) of the matrix body (1) are of a curved or fishbone arrangement.

20. A carrier structure according to one of claims 1 to 19 **characterised in that** the honeycomb matrix body (1) is filled with a foam material.

21. A carrier structure according to claim 20 **characterised in that** the foam material is an in particular corrosion-inhibiting plastic foam.

22. A carrier structure according to one of claims 1 to 21 **characterised in that** the deformation element has a deformation force-deformation travel profile which is constant at least in a portion by virtue of a suitable plurality of desired-deformation locations (3).

23. A carrier structure according to one of claims 1 to 22 **characterised in that** the deformation force-deformation travel profile is of a progressively rising nature in at least one portion by virtue of a distribution, which varies in the axial direction, of desired-deformation locations (3).

24. A carrier structure according to one of claims 1 to 23 **characterised in that** the maximum deformation travel of the deformation element is 60 to 200 mm.

## Revendications

1. Structure porteuse (4) comportant un élément de déformation, notamment pour un véhicule automobile, destiné à l'absorption d'énergie cinétique lors d'un choc, lequel élément de déformation étant supporté au moins d'un coté à la structure porteuse (4) et présentant un corps de matrice (1) en forme de nids d'abeilles avec une enveloppe (2), **caractérisée en ce que** l'élément de déformation présente au moins à une face frontale, sur laquelle il est supporté à la structure porteuse (4), une plaque perforée (9) avec au moins un trou (10) qui est dimensionné de telle façon que des parties du corps de matrice (1) se trouvant dans la zone du trou (10) peuvent être déplacées en direction du trajet de déformation dans le trou (10) et/ou à travers de celui-ci.

2. Structure porteuse selon la revendication 1, **caractérisée en ce que** la plaque perforée (9) présente plusieurs trous (10) répartis également.

3. Structure porteuse selon la revendication 1 ou 2, **caractérisée en ce que** le corps de matrice (1) est formé de couches de tôles (6, 7) et que le bord du trou respectif s'étend sur plusieurs couches de tôles (6, 7).

4. Structure porteuse selon l'une des revendications 1 à 3, **caractérisée en ce que** les trous (10) sont agencés dans la zone extérieure de la plaque perforée (9).

5. Structure porteuse selon l'une des revendications 1 à 4, **caractérisée en ce que** 20 à 80 %, de préférence 40 à 60 %, de l'aire totale de la plaque perforée (9) sont des trous (10).

6. Structure porteuse selon l'une des revendications 3 à 5 comportant un corps de matrice (1) construit de couches de tôles, **caractérisée en ce que** la taille et/ou la forme des trous (10) est réalisée de telle manière, que leur bord respectif croise au moins cinq, de préférence 10, couches de tôles (6, 7).

7. Structure porteuse selon l'une des revendications 1 à 6, **caractérisée en ce que** la plaque perforée (9) est intégrée avec son bord dans le support de la structure porteuse (4).

8. Structure porteuse selon l'une des revendications 1 à 7, **caractérisée en ce que** l'enveloppe (2) a plusieurs anneaux séparés d'enveloppe.

9. Structure porteuse selon l'une des revendications 1 à 7, **caractérisée en ce que** l'enveloppe (2) est réalisée en tant que tube d'enveloppe de manière continue avec des positions destinées à l'inflexion (3).

10. Structure porteuse selon la revendication 9, **caractérisée en ce que** les positions destinées à l'inflexion (3) sont réalisées en tant que bourrelets (3) s'étendant sensiblement de manière périphérique.

11. Structure porteuse selon l'une des revendications 1 à 10, **caractérisée en ce que** l'enveloppe (2) à une épaisseur de 0,3 mm à 2,0 mm, qu'elle est constituée de préférence d'aluminium d'une épaisseur de 0,5 à 2,0 mm ou d'acier, notamment d'un acier doux d'emboutissage d'une épaisseur de 0,3 à 1,5 mm.

12. Structure porteuse selon l'une des revendications 1 à 11, **caractérisée en ce que** le corps de matrice (1) est constitué de couches de tôles (6, 7) structurées, notamment au moins partiellement ondulées avec une multiplicité de canaux (5), dans quel cas les couches de tôles (6, 7) présentent une épaisseur de 0,02 mm à 0,2 mm et le corps de matrice (1) a une densité cellulaire de 50 à 600 cpsi (cells per square inch), les couches de tôles (6, 7) étant constituées notamment de tôle d'aluminium d'une épaisseur de 0,1 à 0,2 mm ou de tôle d'acier d'une épaisseur de 0,02 à 0,15 mm, notamment d'environ 0,1 mm.

13. Structure porteuse selon la revendication 12, **caractérisée en ce que** le corps de matrice (1) est empilé de couches de tôles (6, 7) au moins partiellement structurées.

14. Structure porteuse selon la revendication 12, **caractérisée en ce que** le corps de matrice (1) est enroulé ou enlacé en une forme de spirale, environ en forme de développante ou en forme de S, en un paquet sensiblement cylindrique.

15. Structure porteuse selon l'une des revendications 12 à 14, **caractérisée en ce que** la densité cellulaire du corps de matrice (1) varie par sections en direction des canaux (5).

16. Structure porteuse selon l'une des revendications 12 à 15, **caractérisée en ce que** les couches de tôles du corps de matrice (1) ont des structures à la façon de bourrelets (8) s'étendant transversalement ou obliquement à la direction des canaux (5).

17. Structure porteuse selon la revendication 16, **caractérisée en ce que** les structures à la façon de bourrelets (8) du corps de matrice (1) sont agencées à des écarts de 2 mm à 20 mm.

18. Structure porteuse selon l'une des revendications 12 à 17, **caractérisée en ce que** les couches de tôles du corps de matrice (1), par lesquelles les canaux (5) sont formés, présentent des sections de canaux décalées latéralement.

19. Structure porteuse selon l'une des revendications 12 à 18, **caractérisée en ce que** les ondulations des couches de tôles (6, 7) du corps de matrice (1) ont un agencement courbé ou un agencement en arêtes de hareng.

20. Structure porteuse selon l'une des revendications 1 à 19, **caractérisée en ce que** le corps de matrice (1) en forme de nids d'abeilles est moussé avec un matériau de mousse.

21. Structure porteuse selon la revendication 27, **caractérisée en ce que** le matériau de mousse est une mousse plastique qui est notamment anti-corrosive.

22. Structure porteuse selon l'une des revendications 1 à 21, **caractérisée en ce que** l'élément de déformation a un profil de force de déformation-trajet de déformation, qui au moins dans une section est réalisé de manière constante par une multiplicité appropriée de positions destinées à la déformation (3).

23. Structure porteuse selon l'une des revendications 1 à 22, **caractérisée en ce que** le profil de force de déformation-trajet de déformation est réalisé de façon à hausse progressive au moins dans une section au moyen d'une répartition de positions destinées à la déformation (3), laquelle répartition varie en direction axiale.

24. Structure porteuse selon l'une des revendications 1 à 23, **caractérisée en ce que** le trajet maximal de déformation de l'élément de déformation comporte 60 à 200 mm.
